# EUROPEAN PATENT SPECIFICATION

(11) **EP 4 239 933 B1**
(45) Date of publication and mention of the grant of the patent: **04.11.2026**
(21) Application number: 23159913.5
(22) Date of filing: 03.03.2023
(51) Int. Cl.: H04L 5/00, H04L 1/00, H04L 1/1829

(54) **SIGNALING AND SCHEDULING IN CARRIER AGGREGATION WITH MULTIPLE SERVING CELLS**
SIGNALISIERUNG UND PLANUNG IN DER TRÄGERAGGREGATION MIT MEHREREN VERSORGENDEN ZELLEN
SIGNALISATION ET PROGRAMMATION DANS UNE AGRÉGATION DE PORTEUSES AVEC DE MULTIPLES CELLULES DE DESSERTE

(30) Priority: 03.03.2022 US 202263316407 P; 12.07.2022 US 202263388603 P; 27.07.2022 US 202263392815 P; 11.10.2022 US 202263415263 P; 25.10.2022 US 202263419283 P; 24.01.2023 US 202363440856 P; 24.02.2023 US 202318174600
(43) Date of publication of application: 06.09.2023
(73) Proprietor: Samsung Electronics Co., Ltd., Suwon-si, Gyeonggi-do 16677 (KR)
(72) Inventor: SABER, Hamid, San Jose, CA, 95134 (US); BAE, Jung Hyun, San Jose, CA, 95134 (US)
(74) Representative: Kuhnen & Wacker Patent- und Rechtsanwaltsbüro PartG mbB

(56) References cited:
- EP-A1- 3 917 058
- WO-A1-2022/029297
- WO-A1-2022/029317
- US-A1- 2021 258 999
- NEC: "Multi-cell PDSCH scheduling via a single DCI", vol. RAN WG1, no. e-Meeting; 20210519 - 20210527, 11 May 2021 (2021-05-11), XP052006355, Retrieved from the Internet <URL:https://ftp.3gpp.org/tsg_ran/WG1_RL1/TSGR1_105-e/Docs/R1-2105412.zip R1-2105412 Multi-cell Scheduling via a single DCI.docx> [retrieved on 20210511]

## Description

### TECHNICAL FIELD

The disclosure generally relates to wireless communications. More particularly, the subject matter disclosed herein relates to improvements to mobile communications systems based on a method and a user equipment for defining unambiguous signaling methods.

### SUMMARY

In a cellular system operating according to the Fifth Generation of Mobile Telephony (5G) standard promulgated by the 3rd Generation Partnership Project (3GPP), a User Equipment (UE) may receive a Downlink (DL) Control Information (DCI) by monitoring a Physical Downlink (DL) Control Channel (PDCCH) to obtain scheduling information of a Physical DL Shared Channel (PDSCH) and a Physical Uplink (UL) Shared Channel (PUSCH).

Communication with multiple carriers is supported in the form of Carrier Aggregation (CA). In CA, a UE is able to use multiple Component Carriers (CCs) for DL and UL, allowing the UE to utilize a larger bandwidth than what would be possible using a single CC. There can be multiple modes of CA, including (i) intra-band frequency aggregation with contiguous CCs (ii) intra-band frequency aggregation with non-contiguous CCs, and (iii) inter-band frequency aggregation with non-contiguous CCs.

The aforementioned categorization of CA modes is dependent on the collection of bands containing the CCs that are used; this collection of bands is referred to as the band combination. The UE initially connects to one cell in the CA, which is referred to as the Primary Cell (PCell). Then, the UE finds and connects to multiple other cells in the CA, referred to as Secondary Cells (SCells).

The aforementioned CA can be extended to Dual Connectivity (DC) which may provide higher per-user throughput by offloading data from a master node to a secondary node in case the master node is overloaded. Offloading data from a macro cell to a small cell is an example use case. In a typical scenario the UE is connected to the master node first and then is connected to the secondary node. EN-DC, NE-DC and NN-DC refer to the DC scenarios where the master node and secondary nodes are an evolved node B (eNB), a next generation node B (gNB), (gNB, eNB) and (gNB, gNB), respectively. Deployment scenarios where the nodes are of different radio access technologies are referred to as MR-DC. NE-DC and EN-DC are two examples of MR-DC.

In some embodiments, multiple scheduled cells are scheduled with one DCI on the scheduling cell. To reduce the control signaling overhead for scheduling downlink or uplink data channels, one DCI may schedule multiple different transport blocks (TB's) in multiple cells in a CA deployment.

One issue with the above approach is that the signaling of certain parameters ordinarily sent per PDSCH may not be clearly defined when a single DCI schedules multiple PDSCHs using cross-carrier scheduling.

US 2021/258999 A1 discloses time domain resource assignment for multiple cells scheduled by a single downlink control information message.

WO 2022/029297 A1 discloses a scheduling technique for multiple cells.

NEC: "Multi-cell PDSCH scheduling via a single DCI", 3GPP DRAFT; R1-2105412, 3RD GENERATION PARTNERSHIP PROJECT (3GPP), MOBILE COMPETENCE CENTRE; 650, ROUTE DES LUCIOLES; F-06921 SOPHIAANTIPOLIS CEDEX; FRANCE, vol. RAN WG1 discusses simulation results for multi-cell scheduling via a single DCI and its use case scenarios.

EP 3917058 A1 discloses a method for receiving a downlink control information band and a user equipment using the same.

WO 2022/029317 A1 relates to differential modulation and coding scheme signaling for multi-carrier scheduling.

To overcome these issues, systems and methods are described herein for defining unambiguous signaling methods for such parameters. The above approaches improve on previous methods because they eliminate the ambiguity that may otherwise be present.

The invention is set out in the appended set of claims. According to an embodiment of the present disclosure, there is provided a method, including: receiving, by a User Equipment (UE), in a first Component Carrier (CC), a Downlink Control Information (DCI), the DCI scheduling a first Physical Downlink Shared Channel (PDSCH) in a second CC, and a second PDSCH in a third CC, the second CC and the third CC being different, the DCI including a multi-carrier Time Domain Resource Allocation (TDRA) index; retrieving, based on the multi-carrier TDRA index, from a multi-carrier TDRA table stored by the UE, a TDRA for the first PDSCH and a TDRA for the second PDSCH; and receiving, by the UE, the first PDSCH, using time domain resources for PDSCH reception based on the retrieved TDRA for the first PDSCH. The DCI further includes a K1 timing parameter; and the method further includes transmitting, by the UE, a Physical Uplink Control Channel (PUCCH) corresponding to the first PDSCH and to the second PDSCH, a slot containing the PUCCH being determined, relative to a reference PDSCH of the first PDSCH and the second PDSCH, by the K1 timing parameter. The reference PDSCH is the PDSCH, of the first PDSCH and the second PDSCH, having the latest ending symbol.

In some embodiments, the multi-carrier TDRA table is Radio Resource Control (RRC) configured to the UE by a network node (gNB).

In some embodiments: the DCI further includes a PUCCH resource indicator (PRI); and the symbol position of the PUCCH within the slot is determined by the PRI.

In some embodiments: the DCI further includes a serving cell combination index; and the method further includes retrieving, based on the serving cell combination index, from a serving cell combination table stored by the UE, an identifier of the first CC and an identifier of the second CC.

In some embodiments, the DCI further includes: a first Frequency Domain Resource Allocation (FDRA) field for the first PDSCH; and a second FDRA field for the second PDSCH.

In some embodiments, the DCI further includes: a first redundancy value (RV) field for the first PDSCH; and a second RV field for the second PDSCH.

In some embodiments, the DCI further includes: a first Modulation Coding Scheme (MCS) index field for the first PDSCH; and a second MCS index field for the second PDSCH.

According to an embodiment of the present disclosure, there is provided a User Equipment (UE) including: one or more processors; and a memory storing instructions which, when executed by the one or more processors, cause performance of: receiving, in a first Component Carrier (CC), a Downlink Control Information (DCI), the DCI scheduling a first Physical Downlink Shared Channel (PDSCH) in a second CC, and a second PDSCH in a third CC, the second CC and the third CC being different, the DCI including a multi-carrier Time Domain Resource Allocation (TDRA) index; retrieving, based on the multi-carrier TDRA index, from a multi-carrier TDRA table stored by the UE, a TDRA for the first PDSCH and a TDRA for the second PDSCH; and receiving, by the UE, the first PDSCH, using time domain resources for PDSCH reception based on the retrieved TDRA for the first PDSCH.

In some embodiments, the multi-carrier TDRA table is Radio Resource Control (RRC) configured to the UE by a network node (gNB). The DCI further includes a K1 timing parameter; and the instructions, when executed by the one or more processors, further cause performance of: transmitting a Physical Uplink Control Channel (PUCCH) corresponding to the first PDSCH and to the second PDSCH, a slot containing the PUCCH being determined, relative to a reference PDSCH of the first PDSCH and the second PDSCH, by the K1 timing parameter. The reference PDSCH is the PDSCH, of the first PDSCH and the second PDSCH, having the latest ending symbol.

In some embodiments: the DCI further includes a PUCCH resource indicator (PRI); and the symbol position of the PUCCH within the slot is determined by the PRI.

### BRIEF DESCRIPTION OF THE DRAWINGS

In the following section, the aspects of the subject matter disclosed herein will be described with reference to exemplary embodiments illustrated in the figures, in which:
FIG. 1 is a system diagram of a deployment, according to some embodiments;
FIG. 2 is a scheduling diagram, according to some embodiments;
FIG. 3 is a scheduling diagram, according to some embodiments;
FIG. 4A is a scheduling diagram, according to some embodiments;
FIG. 4B is a scheduling diagram, according to some embodiments;
FIG. 5A is a table of Transmission Configuration Indicators (TCI) and cells, according to some embodiments;
FIG. 5B is a table of combinations of priority indications and data assignment index (DAI) indications, according to some embodiments;
FIG. 6A is a scheduling diagram, according to some embodiments;
FIG. 6B is a scheduling diagram, according to some embodiments;
FIG. 7A is a diagram of a portion of a wireless system, according to some embodiments;
FIG. 7B is a flow chart of a method, according to some embodiments; and
FIG. 8 is a block diagram of an electronic device in a network environment, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

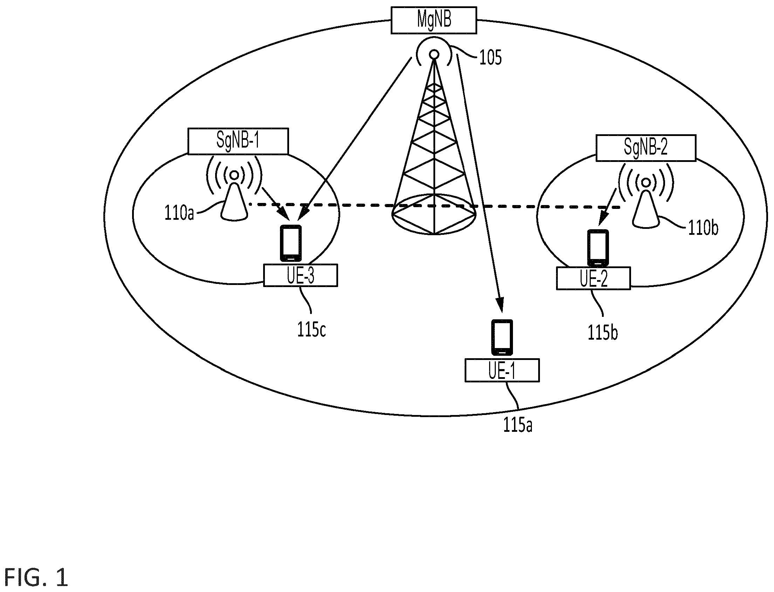

FIG. 1 shows a NN-DC deployment scenario including a master node (MgNB) 105, two secondary nodes (SgNB-1 and SgNB-2) 110a and 110b, and three UEs (UE-1, UE-2, and UE-3) 115a, 115b, 115c. In the example of FIG. 1, UE-3 is in DC mode and is simultaneously connected to two New Radio (NR) nodes, i.e., gNBs. The master node (MgNB) 105 configures a set of serving cells within the master cell group (MCG) and each of the secondary nodes (SgNB) 110a, 110b configures a set of serving cells within the secondary cell group (SCG). The primary cell of the MCG is referred to as the PCell while the secondary cells of the MCG are referred to as SCells. The primary cell of the SCG is referred to as PSCell. PCell and PSCell are also referred to as special cells (SpCell).

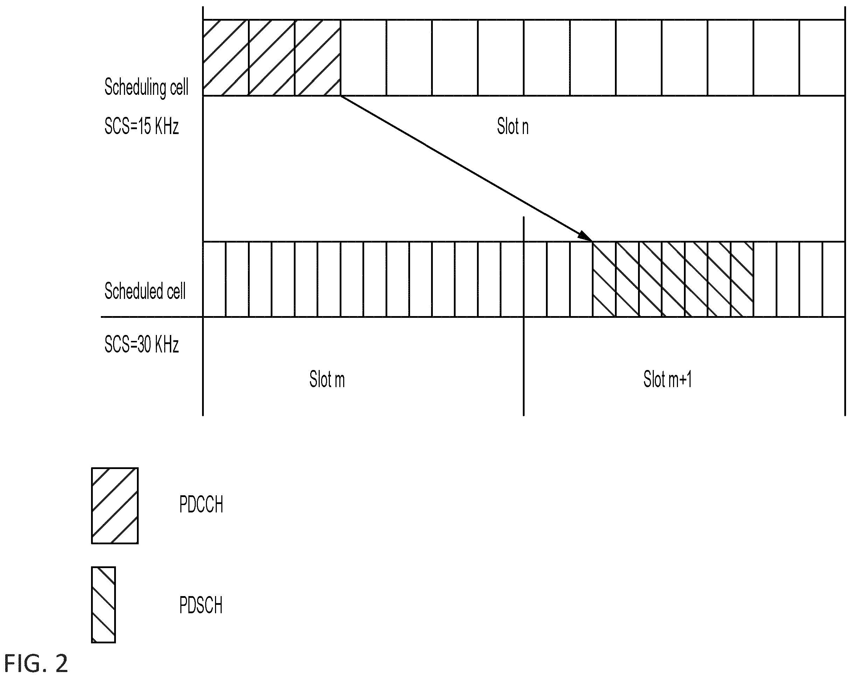

Some embodiments relate to CA deployment scenarios, and the concepts disclosed herein may be extended to each cell group in DC scenarios. In CA, a PDCCH is typically transmitted in each cell to schedule the PDSCH or PUSCH on that cell. This may not be the case, however, in case of cross carrier scheduling (CCS) where a cell, referred to as the scheduling cell, transmits a DCI for a different cell, referred to as a scheduled cell. CCS may be done between scheduling cell and scheduled cell with the same or different numerology *µ*₁ for scheduling cell and *µ*₂ for the scheduled cell. CCS with different numerologies, i.e., with *µ*₁ ≠ *µ*₂, has a strong use case for frequency range (FR1) scheduling FR2. This is because FR1 (e.g., at frequencies below 6 GHz) may have better coverage and it may therefore be more reliable to deliver DL control information on FR1. Cross-carrier scheduling may be an effective way to deliver DL control information for FR2 on FR1. As such, CCS with different numerologies between scheduling cell and the scheduled cell may be of practical value. FIG. 2 shows an example of CCS with different numerologies where a scheduling cell with a subcarrier spacing (SCS) of 15 kHz schedules a scheduled cell of SCS=30 kHz. A PDCCH is transmitted on the first three symbols of slot n of the scheduling cell which schedules a PDSCH on slot *m* + 1 of the scheduled cell.

Monitoring of DCI to decode PDCCH is done on the search space (SS) of the scheduling cell. In TS 38.213 V17.2.0 of 3GPP spec, the SS is described in Clause 10.1

The search space (SS) is categorized into common SS (CSS) and UE-specific SS (USS). In the current system, the CSS except for Type3 group common (GC) PDCCH SS is monitored only on the primary cell while USS and Type3 CSS may be monitored in all cells. In case of CCS, no SS is monitored in a scheduled cell. In some embodiments, the primary cell is a scheduled cell, and dynamic spectrum sharing (DSS) may be employed.

From the perspective of a UE, the processing of a DCI to receive a PDSCH or transmit a PUSCH is subject to processing time. In TS 38.214 of the 3GPP standard, two different UE processing capabilities (capability 1 (cap#1, or Cap 1, or CAP1) and capability 2 (cap#2, or Cap 2, or CAP2)) are defined as specified in Clause 5.3 and 6.4 of TS 38.214 V17.0.0. The capability is in terms of the number of orthogonal frequency-division multiplexing (OFDM) symbols (N1 or N2) a UE requires to process a PDSCH or a PUSCH, and those capabilities depend on several parameters including subcarrier spacing (SCS) or numerology *µ*. It may be seen that N1 or N2 are smaller for cap#2 (shortened processing time) than for cap#1.

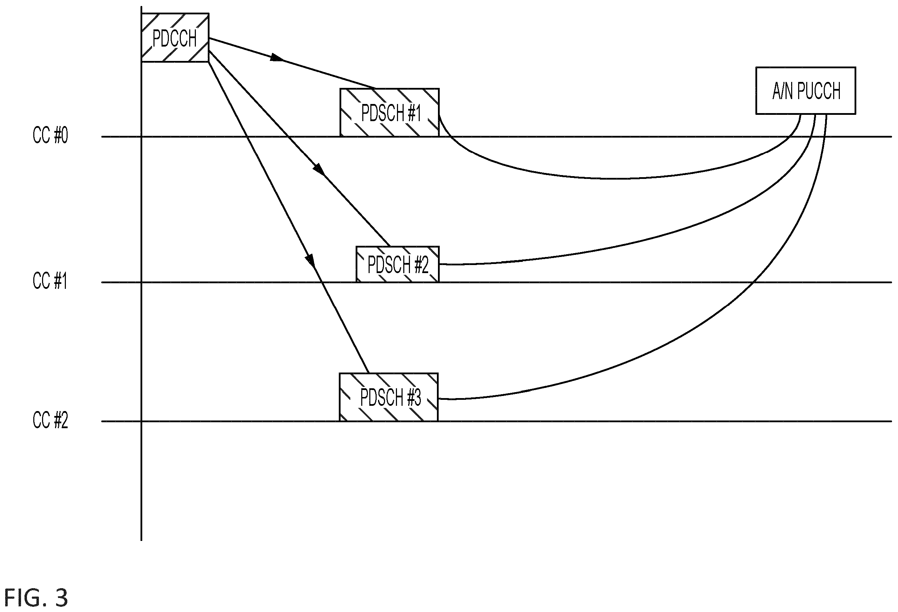

In some embodiments, multiple scheduled cells are scheduled with one DCI on the scheduling cell, as illustrated in FIG. 3. To reduce the control signaling overhead for scheduling downlink or uplink data channels, one DCI may schedule multiple different transport blocks (TB's) in multiple cells in a CA deployment.

When one DCI schedules multiple cells, in one embodiment, parameters in the DCI related to such allocation may be duplicated to have multiple copies. Such allocation parameters may be, but need not be limited to, time domain resource allocation (TDRA), frequency domain resource allocation (FDRA), redundancy version (RV), modulation and coding scheme (MCS), PDCCH-to-PDSCH timing (K0), PDSCH-to-physical UL control signal (PUCCH) timing (K1), PDCCH-to-PUSCH timing (K2), or data assignment index (DAI). Such duplication may increase DCI size and degrade efficiency, which is important for DCIs. In another embodiment, Radio Resource Control (RRC) provides a list of groups of allocation parameters in all cells, and the DCI may indicate an index in the list. Such allocation parameters may be, but need not be limited to, time domain resource allocation (TDRA), frequency domain resource allocation (FDRA), redundancy version (RV), modulation and coding scheme (MCS), PDCCH-to-PDSCH timing (K0), PDSCH-to-physical UL control signal (PUCCH) timing (K1), or PDCCH-to-PUSCH timing (K2). In another embodiment, certain parameters are shared by two cells.

The use of the PDSCH-to-physical UL control signal (PUCCH) timing K1 and PUCCH resource indicator may be affected by whether multiple cells belong to the same PUCCH group. In this case, it may not be advantageous to employ separate PUCCH's. In one embodiment, a single parameter for K1 and a single parameter for the PUCCH Resource Indicator (PRI) are provided, and the actual PUCCH is determined based on the latest PUCCH among hypothetically constructed PUCCH's corresponding to PDSCH numerology and the allocation parameter of each cell. In another embodiment, a single parameter for K1 and a single parameter for the PUCCH resource indicator is provided, and the actual PUCCH is determined based on the earliest PUCCH satisfying the PDSCH processing time of all cells among hypothetically constructed PUCCH's corresponding to the PDSCH numerology and the allocation parameter of each cell. In another embodiment, a certain PDSCH cell is used as a reference cell to determine the actual PUCCH.

If one PUCCH is used, one or more DAI fields may be included in the DCI. If one DAI field is provided, the procedure of constructing Type-2 Hybrid Automatic Repeat Request (HARQ) acknowledgement or negative acknowledgment (ACK/NACK or A/N) (HARQ A/N) codebook provided in TS 38.213 of the 3GPP spec may be modified. For example, the A/N bit location in the codebook may be generated as 'N' consecutive positions where the starting position corresponds to the position of the lowest scheduled cell index, where 'N' is the number of scheduled cells in the DCI. In this case, DAI related operation in the codebook may be skipped for all other scheduled cell indices, and the DAI increment may be one for this DCI. The detailed behavior is defined in clause 9.1.3.1 of TS 38.213 V17.2.0.

In another embodiment, multiple separate PUCCH's are used. A single parameter for K1 and a single parameter for the PUCCH resource indicator may be utilized, and multiple PUCCH's may be constructed based on the single parameter. Multiple DAI fields may be used, since a DAI is with respect to one reference PUCCH slot.

In the following it is assumed that a PDCCH on the scheduling cell schedules *N* PDSCHs on *N* serving cells. The present disclosure includes a section on signaling, and a section on processing time aspects.

### Signaling

The single DCI transmitted on a PDCCH candidate on the scheduling cell may explicitly or implicitly have the following DCI fields: (i) scheduling resources, (ii) carrier Indicator Field (CIF) and (iii) HARQ-ACK slot offset *K*₁ (which may also be written K1).

Scheduling resources: With *N* scheduled cells in the DCI, there may be *N* separate fields for TDRA and FDRA. Alternatively, a TDRA table may be configured specially for multi-cell scheduling where each row has multiple TDRA columns. Each column may be associated with one scheduled cell. The same approach may be used for FDRA. It may also be that the one indicated TDRA or FDRA is applied for all the scheduled cells.

In other embodiments, no new TDRA table including multiple columns is configured. Similar to the legacy operation, each scheduled cell is configured with its TDRA table. A PDCCH that schedules PDSCH reception on cells (CC₁, ..., CC*_{M}*) indicates the resources for PDSCH reception on each cell CC*ⱼ* based on the RRC configuration for PDSCH reception on that cell CC*ⱼ*. For example, if there is a single TDRA field in the DCI which indicates row *i*, the UE determines the time domain resources for PDSCH reception on the cell CC*ⱼ* based on the row *i* of the configured TDRA table for the cell CC*ⱼ*. Similarly, the frequency domain resources for the PDSCH reception on cell CC*ⱼ* are determined based on the BWP part and other applicable configurations in the PDSCH-config of cell CC*ⱼ*.

Carrier Indicator Field (CIF): The scheduling DCI may indicate which *N* cells are scheduled. There may be a mapping between the CIF field and a combination of scheduled cells which could be possibly scheduled by the scheduling cell. This method is discussed further detail below.

HARQ-ACK slot offset *K*₁: may be indicated implicitly or explicitly. This method is discussed further detail below, with the discussion of PUCCH resource determination.

Partial scheduling may be employed, as follows. For increased network flexibility, a mechanism may be provided by which a PDCCH associated with a combination of scheduled cells only schedules PDSCH reception on a subset of the cells in the combination. For example, a scheduled cell indicator field in the scheduling DCI may be configured to indicate to the UE which subset of the cells in the combinations are actually scheduled. This may be accomplished, for example, as follows.

In a first embodiment, a PDCCH candidate associated with scheduled cell combination (CC₁, ..., CC*_{M}*) has an M-bit DCI field such that a value of 1 for the bit position *i*, *i* = 1, ... , *M* indicates that a PDSCH is scheduled on CC*ᵢ* while a value of 0 indicates no PDSCH scheduling on CC*ᵢ*.

In a second embodiment, a new DCI field indicates a row of a serving cell combination table. Each row of the table includes a subset of cells in the combination(CC₁, ..., CC*_{M}*)*.* The table is configured to the UE via RRC.

Such a method may be generalized to a PDCCH candidate to schedule different sets of cells. Different sets may be configured with the same CIF value, in which case, the UE may not be aware, prior to DCI decoding, which cells are scheduled. The dynamic indication may be a bitmap in the DCI where each bit position corresponds to one scheduled cell, in which a value of "1" indicates that the cell is scheduled and "0" indicates no scheduling. The UE may be configured via RRC with an association between each bit position and a scheduled cell. In other embodiments, the dynamic indication may be a serving cell combination table, which may be configured in a manner similar to that described above, where each row includes a set of scheduled cells. The DCI field may then indicate a row of the table.

PUCCH resource determination may be performed as follows. In one method, a single PUCCH is determined to transmit the A/N of the scheduled PDSCHs. Two methods, referred to herein as Method 1 and Method 2, may be employed.

In Method 1 (which uses one PUCCH), one PUCCH resource is determined to transmit the A/N bits of the scheduled PDSCHs. One of the following alternatives, referred to herein as Alt 1, Alt1-1, Alt1-2, Alt 2, and Alt 3, may be used.

In Alt 1 (single field for TDRA, K1 and PUCCH resource indicator (PRI)), a single field is used for each of the TDRA, the PDSCH-to-HARQ feedback timing indicator K1, and the PUCCH resource indicator, for all *N* cells.

In Alt1-1, The network ensures that applying the single field for all cells indicates the same PUCCH slot. The PUCCH resource is determined according to the PRI field. An example may be that the network configures the *N* cells to have the same SCS numerology.

In Alt 1-2, *N* possibly different PUCCH slots and PUCCH resources are determined according to the single DCI field. The UE may then choose a single PUCCH slot and resource among the *N* slots and resources according to one of the following: (i) A reference cell is used to obtain the PUCCH slot and resource, (ii) the UE chooses the PUCCH slot and resource as the earliest PUCCH resource which satisfies the PDSCH processing time of all the cells, or (iii) the UE chooses the PUCCH slot and resource as the latest PUCCH resource among the *N* indicated ones.

In Alt 2 (*N* fields for TDRA, K1 and PRI), *N* different fields are used for each of the TDRA, the PDSCH-to-HARQ feedback timing indicator K1, and the PUCCH resource indicator, for all *N* cells. The network ensures that applying the *N* fields for all cells indicates the same PUCCH slot. In this case the PUCCH resource is determined according to the PRI field corresponding to the serving cell with largest or smallest cell index among the *N* cells.

In Alt 3 (*N* fields for TDRA, K1 and 1 field for PRI), *N* different fields are used for each of the TDRA and the PDSCH-to-HARQ feedback timing indicator, for all *N* cells. The network ensures that applying the *N* fields for all cells indicate to the same PUCCH slot. The PUCCH resource is determined according to the single PRI field.

In one method, *N* different PUCCH resources are determined to transmit the A/N bits of the scheduled PDSCHs.

In Method 2, which uses *N* PUCCHs, *N* possibly different PUCCH resources are determined to transmit the A/N bits of the scheduled PDSCHs. One of the following alternatives, which may be referred to herein as Alt 1 and Alt 2, may be used.

In Alt 1 (single field for TDRA, K1, and PRI), a single field for each of the TDRA, the PDSCH-to-HARQ feedback timing indicator K1, and the PUCCH resource indicator is used for all *N* cells. *N* possibly different PUCCH slots and PUCCH resources are determined according to the single DCI field for the *N* cells. PUCCH resource overriding is only applied for the serving cells with the same PUCCH slot. The actual number *M* of PUCCH transmissions may be less than *N* as some of the fields may indicate the same PUCCH slot.

In Alt 2 (*N* fields for TDRA, K1, and PRI), *N* different fields for each of the TDRA, the PDSCH-to-HARQ feedback timing indicator K1, and the PUCCH resource indicator, are used for all *N* cells. *N* possibly different PUCCH slots and PUCCH resources are determined according to the *N* DCI fields for the *N* cells. PUCCH resource overriding is only applied for the serving cells with the same PUCCH slot. The actual number M of PUCCH transmissions may be less than *N* as some of the fields may indicate the same PUCCH slot.

Various methods may be used to determine the PUCCH resource based on the scheduled cell. In the legacy standard a procedure is specified to define the PUCCH resource based on the one indicated in the DCI, via a PRI field, that is transmitted in the last monitoring occasion (MO) and largest serving cell index (scheduled cell). A similar behavior may be defined with multi-carrier DCI (MC-DCI). For example, if a DCI schedules multiple cells, the DCI may be assumed to have defined the PUCCH resource based on a reference cell, where the reference cell may be, e.g., the cell with the largest (or smallest) index among the set of scheduled cells. It is also possible that the cell on which the PDSCH with the earliest start time is transmitted is considered as the reference cell. Once a reference cell is determined, the behavior specified in the legacy standard may be used to determine the PUCCH resource.

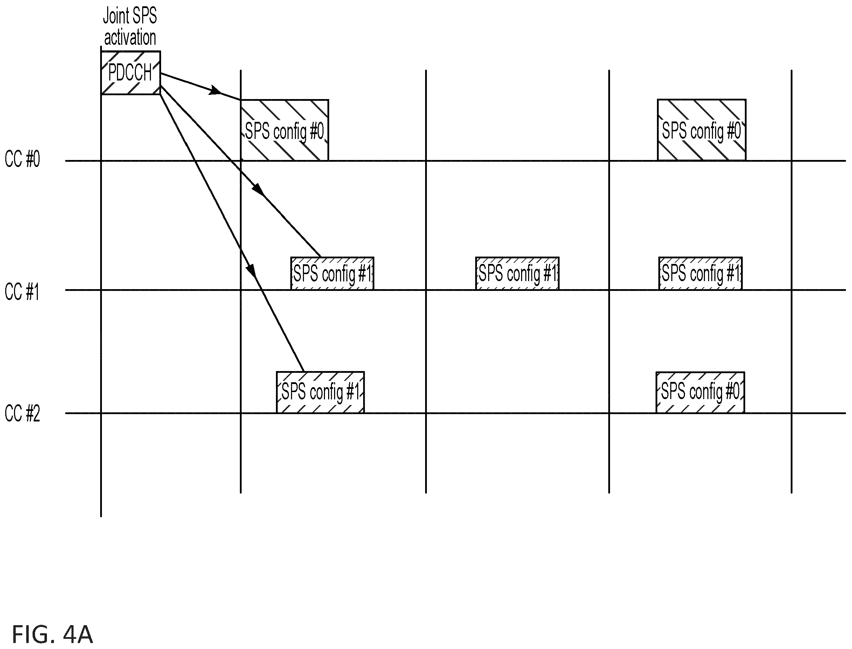

Joint Semi Persistent Scheduling (SPS) activation or release across multiple cells may be used. Once the UE is configured with multi-cell scheduling with the same DCI, it may also be used to activate multiple SPS configurations across the cells, as illustrated in FIG. 4A. In such an embodiment, the activation DCI may indicate the SPS configuration indices to be activated on each cell.

Legacy behavior for joint SPS activation: In Rel-15 and 16, HARQ Process Identifier HPID and Redundancy Value (RV) field in the DCI are used to validate a DL SPS activation. The validation behavior is defined in Clause 10.2 of TS 38.213 V17.2.0.

According to TS 38.213 of the 5G standard, if a UE is provided a single configuration for UL grant Type 2 PUSCH or for SPS PDSCH, validation of the DCI format is achieved if all fields for the DCI format are set according to Table 10.2-1 or Table 10.2-2 of clause 10.2 in TS 38.213 V17.2.0.

If a UE is provided more than one configurations for UL grant Type 2 PUSCH or for SPS PDSCH, a value of the HARQ process number field in a DCI format indicates an activation for a corresponding UL grant Type 2 PUSCH or for a SPS PDSCH configuration with a same value as provided by ConfiguredGrantConfigIndex or by sps-ConfigIndex, respectively. Validation of the DCI format is achieved if the RV field for the DCI format is set as in Table 10.2-3 of clause 10.2 in TS 38.213.

Four cases may occur, referred to herein as Case 1, Case 2, Case 3, and Case 4. In Case 1, one field (which may be referred to as (HPID,RV)) is used to specify a Hybrid Automatic Repeat Request (HARQ) process identifier (HPID) and a redundancy value (RV), and all the indicated cells are configured with one SPS configuration. In this case, to validate the SPS activation, the HPID and RV are both set to all zero. The one SPS configuration on each of the scheduled cells is activated.

In Case 2, one (HPID, RV) field is used, and at least one of the indicated cells is configured with one SPS configuration. In case of multiple SPS configurations on a scheduled cell, the HPID field is no longer used for SPS activation validation but rather to indicate the SPS configuration index that is activated.

In some circumstances, it may be that an SPS activation DCI activates SPS configuration indices on CC 1 and CC2, where CC1 is configured with one SPS configuration while CC2 is configured with two SPS configurations. According to the legacy behavior, since the DCI is to activate the SPS configuration on CC1, the HPID field needs to be set as all-zero, which in turn restricts the gNB's flexibility in selecting the SPS configuration index to activate on CC2. If the legacy standard is followed without any change, the DCI may be interpreted to have activated the SPS configuration index 0 on CC2. In other embodiments, the UE behavior may be otherwise defined.

In one method, the cell with multiple SPS configurations is assumed to only have been configured with a single reference configuration index, and the activation follows Case 1, i.e., the HPID and RV values are set to be all-zero and the reference SPS configuration is activated on CC2. The reference SPS configuration may be the one with the smallest or largest SPS configuration index or it may always be the SPS configuration with SPS configuration index zero.

In another method, all the SPS configurations on all the indicated cells are activated. This may not be the desired behavior but it allows the gNB to activate all SPS configuration indices without any delay with a single HPID field.

In Case 3, multiple (HPID, RV) fields are used, and all the indicated cells are configured with one SPS configuration. In this case, the activation DCI includes M HPID and RV fields. It activates the one SPS configuration on each of the indicated cells. All of the HPID and RV fields are set to all-zero.

The reason for using multiple HPID and RV fields is that the gNB may not always intend to activate cells with single SPS configuration indices. If there were only one HPID field and at least one cell were configured with multiple SPS configurations, there would be a restriction for the gNB on selecting the SPS index as mentioned in Case 2. Since the gNB may need to activate multiple cells with multiple SPS configuration indices, more than one HPID fields may be required.

In Case 4, multiple (HPID, RV) fields are used, and at least one of the indicated cells is configured with one SPS configuration. In this case, the activation DCI includes M HPID and RV fields and indicates *L* scheduled cells.

If *M* ≥ *L,* the first *L* HPID and RV fields are associated with the *L* indicated cells and the behavior follows that specified in Release 15 and 16 (Rel-15/16) of the 5G standard. That is, for each cell with a single SPS configuration index, the associated HPID and RV fields are set as all-zero. For a cell with multiple SPS configuration indexes, the HPID is used to indicate the activated cell while the RV is set to zero.

If *M < L,* some (HPID, RV) fields are determined according to a rule to be associated with more than one cell. For example, if there are two (HPID, RV) fields in the DCI and it schedules three cells, CC1, CC2 and CC3, it may be that the first HPID is used for both CC1 and CC2 and the second one is used for CC3.

In TS 38.213 of Rel-15 of the 5G standard, the SPS operation is defined as follows.

A UE validates, for scheduling activation or scheduling release, a DL SPS assignment PDCCH or configured UL grant Type 2 PDCCH if
- the CRC of a corresponding DCI format is scrambled with a CS-RNTI provided by *cs-RNTI,* and
- the new data indicator field for the enabled transport block is set to '0'.

Validation of the DCI format is achieved if all fields for the DCI format are set according to Table 10.2-1 or Table 10.2-2 in clause 10.2 of TS 38.213 V17.2.0.

If validation is achieved, the UE considers the information in the DCI format as a valid activation or valid release of DL SPS or configured UL grant Type 2. If validation is not achieved, the UE discards all the information in the DCI format.

In one embodiment, SPS activation is not supported for MC DCI. That is, the UE is not expected to receive an MC DCI format scheduling multiple PDSCHs on different cells if (i) the CRC of a corresponding DCI format is scrambled with a CS-RNTI provided by *cs-RNTI,* and (ii) the new data indicator is indicated as '0' via one or multiple DCI fields for any of the scheduled PDSCHs (cells).

In some embodiments, MC SPS release is performed as follows. In the legacy NR, a UE validates, for scheduling activation or scheduling release, a DL SPS assignment PDCCH or configured UL grant Type 2 PDCCH if (i) the CRC of a corresponding DCI format is scrambled with a CS-RNTI provided by *cs-RNTI,* and (ii) the new data indicator field for the enabled transport block is set to '0'. The UE validates the SP release PDCCH as given in the last column of Table 10.2-2 of TS 38.213 V17.2.0, which specifies special fields for single DL SPS or single UL grant Type 2 scheduling release PDCCH validation when a UE is provided a single SPS PDSCH or UL grant Type 2 configuration in the active DL/UL BWP of the scheduled cell.

With MC DCI, the HARQ process number (HPN), RV, MCS and FDRA fields are agreed to be indicated separately for each scheduled PDSCHs with different DCI fields. With MC DCI, SPS release can be realized as follows. The CRC of a corresponding DCI format may be scrambled with a CS-RNTI provided by *cs-RNTI,* and the new data indicator field for the enabled transport block may be set to '0'. If the DCI indicates a cell combination via the corresponding CIF value or via RRC configuration, the UE validates the SPS release on each of the cells, by applying the conditions shown in Table 10.2-2 separately for each cell.

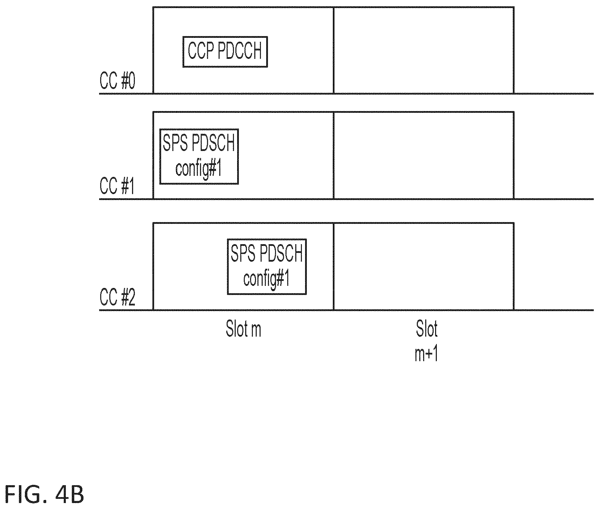

The following provides more detailed solutions for MC SPS release. SPS release PDCCH timeline aspects may be handled as follows. In legacy NR, conditions have been provided for a UE to receive the SPS release PDCCH and the SPS PDSCHs in the same slot. TS 38.213 defines the behavior. If the SPS release PDCCH and the PDSCHs are received in the same slot, the PDCCH must end before the end of every PDSCH, otherwise it is an error case. With MC DCI, if the PDCCH releases multiple PDSCHs in the respective serving cells, a situation in which the PDCCH is received before the end of some PDSCHS and after the end of some others needs to be considered. As may be seen in FIG. 4B, a UE behavior is defined for CC#2 as it is supported by Release 16 of the 5G standard, while the situation in CC#1 is not supported.

The behavior of a UE may be as follows. To have a consistent behavior with releasing multiple SPS configurations on the same cell, in one method, the PDCCH must end before the end of each of the SPS PDSCH occasions on the cells. With this method, FIG. 4B is an error case. If the PDCCH ends before the end of at least one PDSCH, the UE is not expected to receive the SPS PDSCHs, it does not provide HARQ-ACK bits for them, and it provides one HARQ-ACK bit for the SPS release PDCCH.

A/N location with Type-1 HARQ-ACK CB may be handled as follows. In legacy NR, with Type-1 HARQ-ACK CB, the location of the A/N of the SPS release PDCCH is the corresponding location of the SPS PDSCH occasion. This behavior is defined in TS 38.213 V16. According to this defined behavior, the location of the A/N of the release PDCCH is the scheduled cell, i.e., the serving cell on which the SPS configurations are configured, which is also indicated by the CIF field in the DCI. With MC DCI, if multiple SPS configurations are released on different cells, which one of the cells is used to carry the A/N bit needs to be defined. In one embodiment, a reference cell among the indicated set of cells with the released SPS configurations is defined and the A/N bit is placed in a location in that cell according to the legacy behavior defined in TS 38.213 V16. The reference cell may be defined as the cell with lowest or largest cell ID or according to the start or end time of the corresponding released SPS PDSCH occasions on the cell. As an example, if the release PDCCH on CC#0 releases two SPS configurations on CC#1 and CC#2 and the reference cell is CC#1, the A/N bit is placed in a location on CC#1 according to the legacy method.

The following section of the present disclosure discusses the DCI field structure for multi-cell (MC)-DCI.

TDRA field: A single TDRA field may be shared among all the co-scheduled cells. With a shared field, in one embodiment, each cell is configured with its own TDRA table and the field is separately applied for each cell based on a respective table corresponding to the cell. In some embodiments, a joint TDRA table is configured for multiple cells. The table may include multiple columns each associated with one scheduled cell. The association may be explicit, e.g., based on cell index, or implicit. The shared TDRA field then indicates a row of the table. Equivalently a TDRA codepoint may be jointly associated with multiple scheduled cells.

FDRA field: Methods for TDRA may be similarly applied to FDRA.

MCS field: In some embodiments, a separate MCS indication is sent for each scheduled cell, Transport block (TB), and PDSCH. As such, in one scheme, there are separate MCS fields each associated with one scheduled cell. The association may be based on cell index. For instance, the first MCS field may be applied to the cell with smallest cell index, the second MCS field may be applied to the cell with second smallest cell index and so on. Similar to TDRA and FDRA fields, it may also be that one MCS field is shared for all the cells. In this case, each MCS codepoint is associated with a combination of MCS values for a combination of cells. For example, a MCS codepoint in the MC-DCI may point to a pair of MCSs (which may be denoted (MCS1, MCS2)). In this case, MCS1 is applied to the first scheduled cell while MCS 2 is applied to the second cell. The ordering of cells may be based, for example, on cell index or on PDSCH/PUSCH start time.

RV/New Data Indicator (NDI)/HPID: Both NDI and RV may also be indicated to the cells separately. This may be done with a single shared field or separate fields. A similar design may be applied to the HPID field.

SRS resource indicator (SRI)/Transmit Precoder Matrix Indicator (TPMI): The handling of SRI and TPMI may depend on whether inter-band CA or intra-band CA is being used. At least for inter-band CA, different PDSCH/PUSCHs on different cells may experience different channel environments, so different precoders and uplink beams may be indicated for the different cells. This may not be true for intra-band CA. In one embodiment, if a DCI schedules two cells, where the two cells belong to different bands, then the SRS resource and precoder and the number of layers may be indicated separately for the two scheduled channels, cells, and TBs. This may be done with a single SRI or TPMI field or with multiple fields. If a single field is used, codepoints may be used to indicate different values to the different cells. The above schemes may be applied to both codebook-based and non-codebook based PUSCH transmission.

For intra-band CA, the gNB may not need to indicate different uplink beams or precoders to different cells. Therefore, one single DCI field for SRI/TPMI may be configured if the scheduled cells belong to the same band.

Although the above scheme for intra-band CA may be applied to both codebook (CB) and non-codebook (NCB) PUSCH, CB and NCB may be different in certain respects.

For CB PUSCH, it may be reasonable to indicate the same analog beam for the PUSCHs scheduled on different cells due to the intra-band nature of the CA. For CB PUSCH, this means that a single SRI is indicated for the PUSCHs via a single DCI field. While application of the same analog beams to the PUSCHs may be reasonable, the gNB may still need to indicate different digital beams, otherwise known as precoders, to the PUSCHs. This is mainly because a precoder is a frequency domain specific feature and is aimed to perform proper directing of the transmission streams towards the receive antenna. Therefore, in one embodiment, while having a single SRI indication for different PUSCHs, different precoders and numbers of layers, via separate indications of the Transmission Precoder Matrix Indication (TPMI) and of the number of layers, are performed for different PUSCHs. The separate indication may be via a single field or via multiple fields. If a single field is used, different codepoints associated with a combination of values of TPMIs may be used.

For NCB based PUSCH, separate indication of digital precoding may be used for similar reasons as in the case of CB PUSCH. Since the precoding is determined based on the SRS resource indication field in the DCI, based on the indicated SRS resources in the applicable SRS resource set, separate SRI indication of the SRI values for different PUSCHs may be used for NCB based PUSCH. The separate indication may be done with a single SRI field or with multiple SRI fields, similar to other DCI fields mentioned above.

In order to provide the gNB with scheduling flexibility, a mechanism may be provided to allow a MC-DCI to schedule a number of cells where a subset of the cells belong to one band while the remaining cells belong to a different band. For instance, the gNB may schedule four cells where the first two cells belong to band A and the second two cells belong to band B. This type of scheduling may be referred to as co-existence of intra-band and inter-band scheduling. To handle such a scheduling scenario, the previous methods for SRI/TPMI may be generalized by introducing the notion of an intra-band group of cells. An intra-band group of cells is a set of scheduled cells that belong to the same band. In the example above, there are two intra-band groups of cells: one group includes the first two cells and another group includes the second two cells. The methods for SRI/TPMI described in this section may be generalized such that whenever separate indication of a DCI field is done, it is done per the group of cells. In other words, instead of separate indication for each cell, a separate indication is used for each group. For the scheduling example above, with this scheme, a first indication is used for the first group of cells while a second indication is used for the second group of cells.

Transmission Configuration Indicator (TCI): TCI state is in general a cell-specific parameter. Therefore, in one embodiment, separate indication of TCI states for the scheduled cells is applied. The separate indication may be done with a single TCI field or with multiple TCI fields in the MC-DCI. In the case of a single DCI field, a codepoint of TCI is defined to map to a combination of TCI states applicable to a combination of cells. In particular, a TCI state codepoint may be in the form of (TCI state #1, TCI state #2) where the UE determines the TCI state of the first PDSCH on the first cell by selecting the TCI state #1 from the set of activated TCI states for the cell by Media Access Control (MAC) Control Element (CE) (MAC-CE). It determines the TCI state of the second PDSCH based on TCI state #2 and the set of activated TCI states for the second cell by MAC-CE. It is also possible that the TCI state field indicates a TCI state ID for a reference cell among the scheduled cells. The indicated TCI state is then applied for all the co-scheduled cells. The reference cell may be RRC configured, or determined as the cell with lowest or highest serving cell index.

MAC-CE activation: In case of a single TCI state DCI field, from the set of RRC configured or MAC-CE activated TCI states for each cell, a MAC-CE may further activate a set of combinations of TCI states in the form of (TCI state #*i*₁ of cell 1, TCI state #*i*₂ of cell 2, ... ). When a DCI schedules a combination of cells, from the set of activated combinations of those cells, the UE may select a combination based on the index indicated in the DCI.

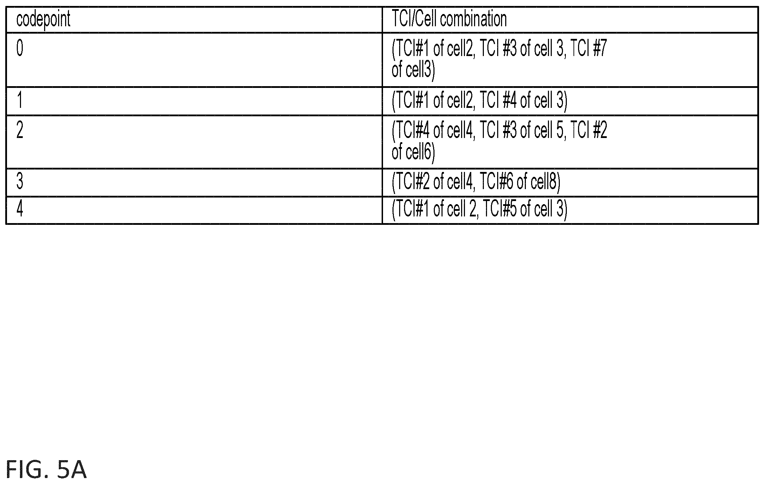

In the table of FIG. 5A, if the scheduling DCI schedules cells 2 and 3, a codepoint of TCI only applies to the two rows corresponding to codepoints 1 and 4. Since the indicated cells are determined based on other fields, e.g., CIF values, the gNB may indicate codepoint 0 for the first row of these two rows and codepoint 1 for the second row of these two rows. It is also possible that a MAC CE only activates a set of tuples of TCI states without an association with the cells. In that case, the first entry may be used for the first co-scheduled cell, the second entry may be used for the second co-scheduled cell, and so on.

Alternatively, a MAC CE may activate a single set of TCI states. When a TCI state identifier (ID) is indicated by a MAC CE, the TCI state ID may be activated for each of the scheduled cells. In a different scheme, a MAC CE simultaneously activates different TCI states for the set of co-scheduled cells. In other words, indication of the tuple (TCI state ID 1, TCI state ID 2) in the MAC CE activates the TCI state ID 1 for the first cell and TCI state ID 2 for the second cell.

Transmit Power Control (TPC): A closed loop power control parameter indication for different scheduled cells may also be indicated separately or shared by the cells. In essence, the scheme may be similar to the SRI/TPMI field described above.

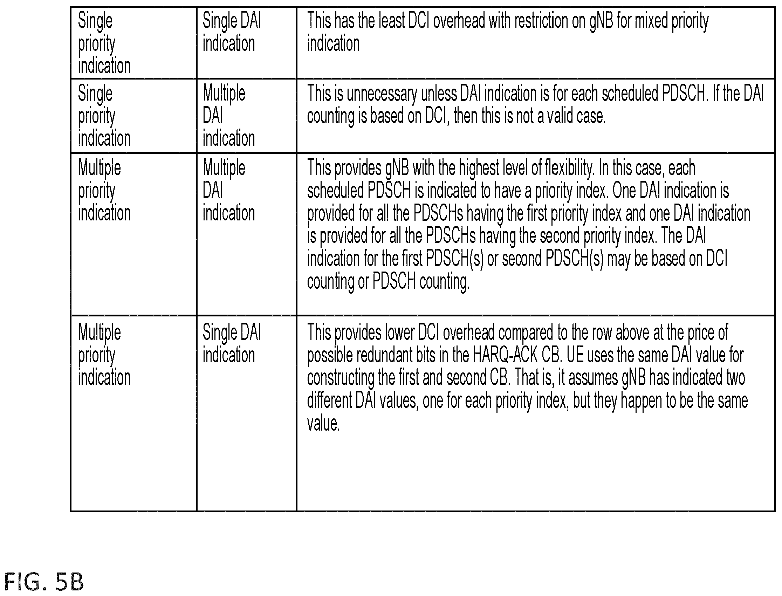

Priority indicator for PDSCH: In Rel-16, a DCI scheduling a PDSCH may indicate a physical layer (Phy layer) priority index for the PDSCH. To be more precise, the priority belongs to the HARQ-ACK PUCCH corresponding to the PDSCH. Different PDSCHs with different priorities have different HARQ-ACK codebooks, and DAI indication in the DCI is independently performed for each HARQ-ACK CB/priority. With an MC-DCI scheduling multiple PDSCHs, the cases illustrated in the table of FIG. 5B are possible.

Although different methods corresponding to the different combinations in the table of FIG. 5B may be configured to the UE, one scheme is to only allow scheduling the same priority PDSCHs with an MC-DCI. In this case a single priority field and a single DAI field are sufficient in the DCI. In other embodiments, in light of the reduced importance of multi-cell scheduling in Ultra-Reliable Low Latency Communications (uRLLC), an MC-DCI does not include a priority indication field, and all the scheduled cells are assumed to be low priority.

Priority indicator for PUSCH: Although the priority indication fields may be separately indicated for the scheduled PUSCHs, it may be advantageous to have a single indication for all the scheduled PUSCHs. In other words, the UE expects all of the scheduled PUSCHs to be associated either with a low priority level or with a high priority level. Alternatively, it may be supported that the scheduled PUSCHs are all always low priority, hence no uRLLC service is supported for multi-cell scheduling.

### Processing time aspects

Processing time considerations may depend on whether the processing time capabilities applicable to co-scheduled cells are different or the same.

In Rel-15, different processing time capabilities are applicable to downlink and uplink channel transmissions. For PDSCH, a processing time *T*_{*proc*,1} is provided from the end of the ending symbol of the PDSCH to the start of the starting symbol of the PUCCH which carries HARQ-ACK. Clause 5.3 of TS 38.214 V17.0.0 provides the details of the PDSCH processing time.

As may be seen from this portion of the standard, two processing time capabilities, Capability 1 (Cap 1) and Capability 2 (Cap 2) are available for normal and fast PDSCH processing. Similar to the PDSCH processing time, there are two capabilities for PUSCH processing time which is measured from the end of the ending symbol of the scheduling PDCCH and the start of the starting symbol of the PUSCH. Details are provided in clause 6.4 of TS 38.214 V17.0.0.

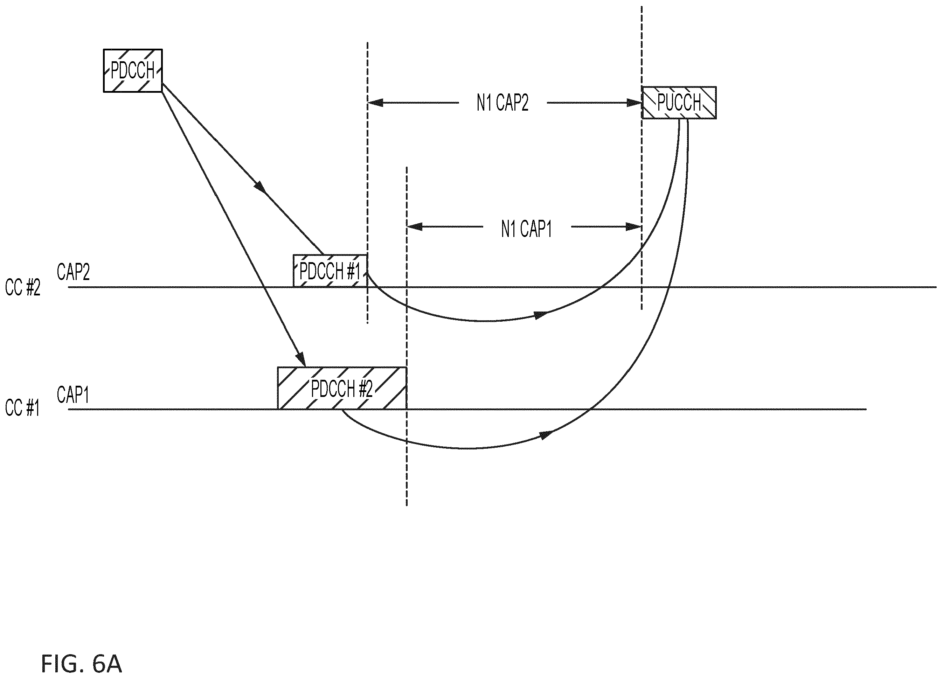

Whether Capability 1 or Capability 2 is applicable depends on the UE capability reporting and is determined by RRC configuration in *PDSCH-ServingCellConfig and PUSCH-ServingCellConfig.* The configuration is per serving cell which allows for maximum flexibility for the gNB to configure cells with different capabilities for different service types. In Rel-15, each scheduled cell has its own scheduling PDCCH and TDRA table. Therefore, the gNB may schedule the PDSCH and the PUCCH so as to satisfy the capability level, without any interdependency between the scheduled cells. The situation may be different in Rel-18 with multi-carrier (MC)-DCI scheduling multiple cells, if those co-scheduled cells are configured with different capability levels. In particular, if some of the co-scheduled cells are Cap 1 and some are Cap 2, and the HARQ-ACKs are mapped to the same PUCCH, the processing time of the Cap 1 cells may be stressed. An example is shown in FIG. 6A. A PDCCH schedules two PDSCHs where one cell is Cap 1 and the other cell is Cap 2. If the gNB intends to schedule the PDSCH on CC#2 with Cap 2 processing time, it may stress the processing time of the PDSCH on CC#1, as it is a Cap 1 cell. Methods referred to herein as Method a1, Method b1, Method c1, Method d1, Method a2, and Method b2, may be employed.

In Method a1, in which co-scheduled cells have the same processing capability level, if the UE is configured with multi-cell scheduling with a single MC-DCI, and the DCI schedules multiple PDSCHs on different cells, those scheduled cells are configured to have the same PDSCH processing time capability. In other words, the UE does not expect that multiple PDSCHs on different cells are scheduled by an MC-DCI, if some of the cells are Cap1 and some are Cap 2.

The above method puts a configuration restriction on the gNB to prevent the processing timeline issue from occurring. Alternatively, the following method (Method b1) may be used, at the expense of DCI overhead.

In Method b1, in which different PUCCHs are used for different K1 fields, if the UE is configured with multi-cell scheduling with a single MC-DCI, and a set of cells is configured to be co-scheduled with the same MC-DCI, the HARQ-ACK bits of the PDSCHs on cells with different capabilities are mapped to different PUCCHs. The different PUCCHs are determined by two different PDSCH-to-HARQ_feedback timing indicator fields (K1 fields) in the DCI, where the first field applies to the Cap 1 cells and second field applies to Cap 2 cells among the co-scheduled cells.

Different PUCCHs for cells with different capabilities may also be implemented using one K1 field in the DCI, with the modification that the K1 is applied independently to each scheduled PDSCH.

In Method c1, in which different PUCCHs are used for the same K1 field, which is applicable to each PDSCH, if the UE is configured with multi-cell scheduling with a single MC-DCI, and a set of cells is configured to be co-scheduled with the same MC-DCI, the HARQ-ACK bits of the PDSCHs on cells with different capabilities are mapped to different PUCCHs. The different PUCCHs are determined by a single PDSCH-to-HARQ feedback timing indicator field (K1 field) in the DCI, where the field is separately applied to each scheduled PDSCH.

Applying the same K1 field to each of the co-scheduled PDSCHs may result in an unnecessarily large number of PUCCHs. Having fewer PUCCHs may be advantageous, to multiplex the A/N bits and have a larger Uplink Control Information (UCI) payload for increased reliability.

In Method d1, in which different PUCCHs are used for the same K1 field applicable to each reference PDSCH, if the UE is configured with multi-cell scheduling with a single MC-DCI, and a set of cells is configured to be co-scheduled with the same MC-DCI, the HARQ-ACK bits of the PDSCHs on cells with different capabilities are mapped to different PUCCHs. The different PUCCHs are determined by a single PDSCH-to-HARQ feedback timing indicator field (K1 field) in the DCI. The field is separately applied to cells with different capabilities. For a group of the PDSCHs scheduled on cells with the same capability level, a reference PDSCH is determined. The K1 field is applied to the reference PDSCH in the group of PDSCHs to determine a single PUCCH for all the PDSCHs in the group.

The above methods may be essentially applied to MC-DCI scheduling multiple PUSCHs on different cells.

In Method a2, in which co-scheduled cells have the same processing capability level, if the UE is configured with multi-cell scheduling with a single MC-DCI, and the DCI schedules multiple PUSCHs on different cells, those scheduled cells are configured to have the same PUSCH processing time capability. In other words, the UE does not expect that multiple PUSCHs on different cells are scheduled by an MC-DCI, if some of the cells are Cap1 and some are Cap 2.

In Method b2, in which different PUCCHs are used for different K2 (TDRA) fields, if the UE is configured with multi-cell scheduling with a single MC-DCI, and a set of cells is configured to be co-scheduled with the same MC-DCI, the UE applies different TDRA fields, including K2 and the Start and Length Indicator Value (SLIV), to the scheduled PUSCHs. In some embodiments, different TDRA fields are included in the DCI for each scheduled PUSCH, or for each group of scheduled PUSCHs. Alternatively, two fields are configured and the UE applies the first field to all PUSCHs that are scheduled to be transmitted on Cap 1 cells, and second field to all PUSCHs that are scheduled to be transmitted on Cap 2 cells.

Method a1, Method b1, Method c1, Method d1, Method a2, and Method b2 above are solutions based on which different PUCCH resources are used for different PDSCHs or different cells or groups of cells. In general, to allow for flexible scheduling on different cells without sacrificing the different capabilities of the cells, the gNB may indicate the scheduling and HARQ-ACK timing offsets of the different cells separately. For instance, in one embodiment, for M code-scheduled cells, different scheduling offsets (slot offset *K*₀ and SLIV) are applied to different cells or groups of cells. Similarly, different HARQ-ACK timing offsets may be applied to different cells or groups of cells. A group of cells may be defined as all scheduled cells having the same processing time capabilities. Different indications of scheduling and HARQ-ACK slot offsets may be done via a single or multiple TDRAs and/or HARQ-ACK slot offset fields. In one embodiment, two different fields of TDRA and/or HARQ-ACK slot offset and/or PUCCH resource indicators are configured in the DCI. The UE applies the first field to the first group of co-scheduled cells configured with CAP1 and the second field to the second group of co-scheduled cells configured with CAP2.

The issue of co-scheduling different cells with different capabilities also exits when the co-scheduled cells are configured with the same capability, e.g., all CAP1, but with different SCSs. In particular if the co-scheduled cells have different SCSs which are far from each other, then they operate as having different capability (CAP) to some extent. For instance, for a CAP1 cell with SCS = 15 kHz, *N₁* = 10 while for a CAP1 cell with SCS = 120 kHz, *N*₁ = 36 which is equivalnet to $\frac{36}{8} = 4.5$ OFDM symbol of SCS 15 kHz. In absolute amount of time the second cell is more than two times slower than the first cell. Therefore, the issue arising from different capabilities of the co-scheduled cells also exists when the cells have the same capabilities but different SCSs. The following methods may be used for this case.

In one embodiment, if the MC-DCI schedules multiple cells of the same capabilities, they must have the same SCS. In other words, the UE is not expected to be co-scheduled with multiple cells via a single MC-DCI if the cells have different SCS values.

In a different embodiment, any of the solutions from Method a1 to Method b2 which do not acknowledge different capabilities among the co-scheduled cells may directly be applied to the case of same capability cells with different SCS.

In another embodiment, any of the solutions from Method a1 to Method b2 which are based on different capabilities among the co-scheduled cells may be applied to the case with the same capability and different SCS with the following modification.

The set of co-scheduled cells with the same capability (CAP) but different SCSs is divided into two groups. The first group includes all the cells whose SCS values are smaller or equal to a threshold *SCS_{threhsold}* and the second group includes all the cells whose SCS values are larger than the threshold. The SCS threshold is either fixed or configured via RRC.

Any of Method a1 to Method b2 may then be applied assuming all the cells in the first group are CAP1 and all the cells in the second group are CAP2.

The definition of PDSCH processing time may be handled as follows. In the legacy NR, the PDSCH processing time is defined in TS 38.214 V17.As described in this portion of the standard, the PDSCH processing time is defined from the end of the scheduled PDSCH to the start of the PUCCH indicated by the DCI. In case of multiple PDSCHs scheduled by a single DCI, the PDSCH processing time may be defined from a reference PDSCH. Alternatively, multiple processing times may be defined for each of the scheduled PDSCHs.

The case of a single processing time from a reference PDSCH may be handled as follows. Since the slot offset and PUCCH resource determination is agreed to be from the reference PDSCH, it may be natural to also define a single PDSCH processing time for all the scheduled PDSCHs from the end of the reference PDSCH to the start of the PUCCH. The reference PDSCH may be defined as the PDSCH with latest start or ending symbol, or a PDSCH transmitted or received on a reference cell among the set of cells, e.g., based on cell configuration index (smallest or largest).

One issue with defining a single PDSCH processing time from the reference PDSCH is how to determine the relaxation time *d*_{1,1}. In legacy NR, the PDSCH processing time may be relaxed depending on the number of overlapping symbols between the PDSCH and the scheduling PDCCH. The following excerpt from TS 38.213 defines the behavior. With MC scheduling multiple PDSCHs, the number of overlapping symbols between the PDCCH and the PDSCHs may be different for different PDSCHs, therefore the amount of relaxation may also be different. The relaxation amount may be denoted as *d_{relaxed}.* In one embodiment *d_{relaxed}* is determined by considering the reference PDSCH and the corresponding number of overlapping symbols. In a different method, the reference PDSCH is the PDSCH, of the PDSCHs scheduled by the PDCCH, that results in the largest relaxation amount.

The case of multiple processing times (per scheduled PDSCH) may be handled as follows. Another possibility is that the PDSCH processing time is defined and calculated according to the legacy NR for each scheduled PDSCH. In this case, different scenarios are possible.

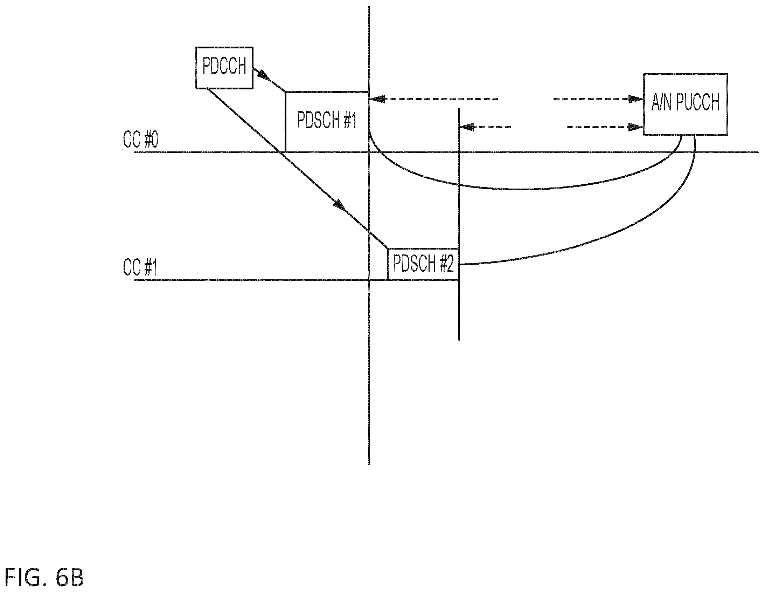

The processing time is either sufficient for every PDSCH or insufficient for every PDSCH. If sufficient processing time is provided for every PDSCH, the UE provides a valid A/N bit, and if it is not provided for any of them, the UE will not provide valid A/N bits for the PDSCHs. It is supported that the processing time is sufficient for some PDSCHs and insufficient for some others. An example is shown in FIG. 6B, in which the provided time is sufficient for processing of PDSCH#1 but not for PDSCH#2. In this case, the UE behavior can be defined to provide a valid HARQ-ACK bit only for the PDSCH with sufficient processing time, i.e., PDSCH#1 in FIG. 6B. The UE may not provide a valid HARQ-ACK bit for the PDSCH with insufficient processing time, i.e. PDSCH#2 in FIG. 6B.

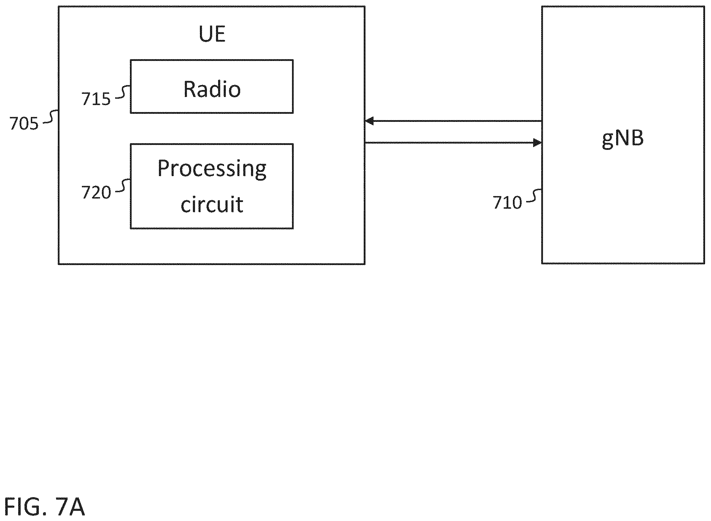

FIG. 7A shows a portion of a wireless system. A user equipment (UE) 705 sends transmissions to a network node (gNB) 710 and receives transmissions from the gNB 710. The UE includes a radio 715 and a processing circuit (or "processor") 720. In operation, the processing circuit may perform various methods described herein, e.g., it may receive (via the radio, as part of transmissions received from the gNB 710) information from the gNB 710, and it may send (via the radio, as part of transmissions transmitted to the gNB 710) information to the gNB 710.

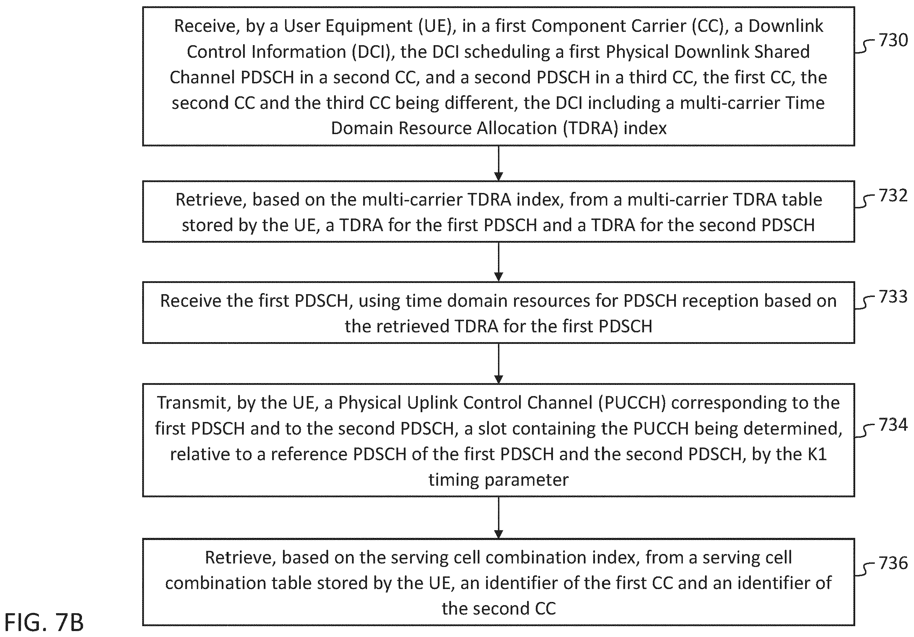

FIG. 7B is a flow chart of a method, in some embodiments. The method includes receiving, at 730, by a User Equipment (UE), in a first Component Carrier (CC), a Downlink Control Information (DCI), the DCI scheduling a first Physical Downlink Shared Channel PDSCH in a second CC, and a second PDSCH in a third CC, the first CC, the second CC and the third CC being different, the DCI including a multi-carrier Time Domain Resource Allocation (TDRA) index; retrieving, at 732, based on the multi-carrier TDRA index, from a multi-carrier TDRA table stored by the UE, a TDRA for the first PDSCH and a TDRA for the second PDSCH; and receiving, at 733, the first PDSCH, using time domain resources for PDSCH reception based on the retrieved TDRA for the first PDSCH. The method further includes transmitting, at 734, by the UE, a Physical Uplink Control Channel (PUCCH) corresponding to the first PDSCH and to the second PDSCH, a slot containing the PUCCH being determined, relative to a reference PDSCH of the first PDSCH and the second PDSCH, by the K1 timing parameter. The method further includes retrieving, at 736, based on the serving cell combination index, from a serving cell combination table stored by the UE, an identifier of the first CC and an identifier of the second CC.

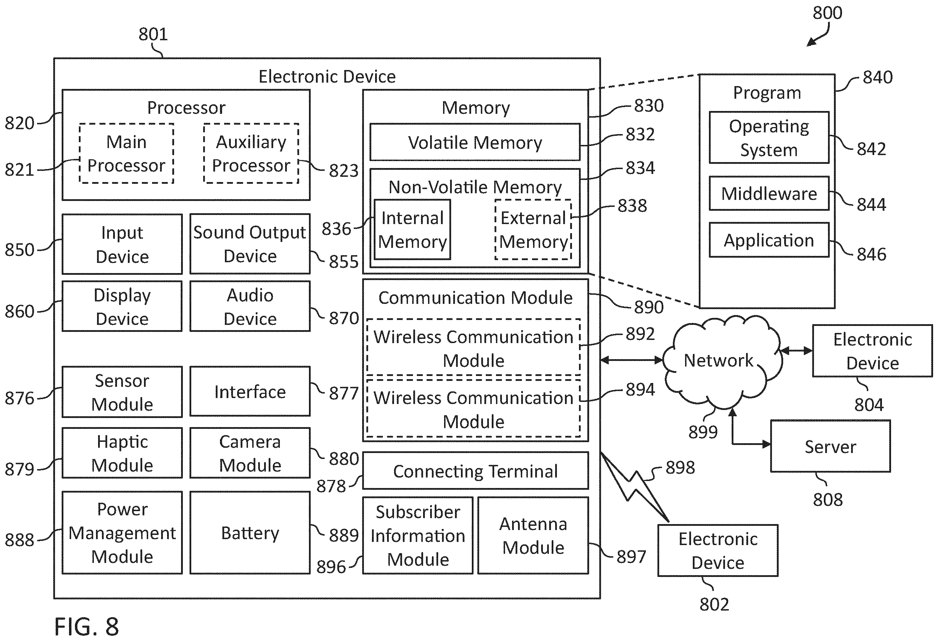

FIG. 8 is a block diagram of an electronic device (e.g., a UE 705) in a network environment 800, according to an embodiment. Referring to FIG. 8, an electronic device 801 in a network environment 800 may communicate with an electronic device 802 via a first network 898 (e.g., a short-range wireless communication network), or an electronic device 804 or a server 808 via a second network 899 (e.g., a long-range wireless communication network). The electronic device 801 may communicate with the electronic device 804 via the server 808. The electronic device 801 may include a processor 820, a memory 830, an input device 840, a sound output device 855, a display device 860, an audio module 870, a sensor module 876, an interface 877, a haptic module 879, a camera module 880, a power management module 888, a battery 889, a communication module 890, a subscriber identification module (SIM) card 896, or an antenna module 894. In one embodiment, at least one (e.g., the display device 860 or the camera module 880) of the components may be omitted from the electronic device 801, or one or more other components may be added to the electronic device 801. Some of the components may be implemented as a single integrated circuit (IC). For example, the sensor module 876 (e.g., a fingerprint sensor, an iris sensor, or an illuminance sensor) may be embedded in the display device 860 (e.g., a display).

The processor 820 may execute software (e.g., a program 840) to control at least one other component (e.g., a hardware or a software component) of the electronic device 801 coupled with the processor 820 and may perform various data processing or computations.

As at least part of the data processing or computations, the processor 820 may load a command or data received from another component (e.g., the sensor module 846 or the communication module 890) in volatile memory 832, process the command or the data stored in the volatile memory 832, and store resulting data in non-volatile memory 834. The processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or execute a particular function. The auxiliary processor 823 may be implemented as being separate from, or a part of, the main processor 821.

The auxiliary processor 823 may control at least some of the functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input device 850 may receive a command or data to be used by another component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. The display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. The audio module 870 may obtain the sound via the input device 850 or output the sound via the sound output device 855 or a headphone of an external electronic device 802 directly (e.g., wired) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device 802 directly (e.g., wired) or wirelessly. The interface 877 may include, for example, a high- definition multimedia interface (HDMI), a universal serial bus (USB) interface, a secure digital (SD) card interface, or an audio interface.

A connecting terminal 878 may include a connector via which the electronic device 801 may be physically connected with the external electronic device 802. The connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus which may be recognized by a user via tactile sensation or kinesthetic sensation. The haptic module 879 may include, for example, a motor, a piezoelectric element, or an electrical stimulator.

The camera module 880 may capture a still image or moving images. The camera module 880 may include one or more lenses, image sensors, image signal processors, or flashes. The power management module 888 may manage power supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the AP) and supports a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as BluetoothTM, wireless-fidelity (Wi-Fi) direct, or a standard of the Infrared Data Association (IrDA)) or the second network 899 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. The antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

Commands or data may be transmitted or received between the electronic device 801 and the external electronic device 804 via the server 808 coupled with the second network 899. Each of the electronic devices 802 and 804 may be a device of a same type as, or a different type, from the electronic device 801. All or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method, comprising:
receiving (730), by a User Equipment, UE, (705) in a first Component Carrier, CC, a Downlink Control Information, DCI, the DCI scheduling a first Physical Downlink Shared Channel, PDSCH, in a second CC, and a second PDSCH in a third CC, the second CC and the third CC being different, the DCI including a multi-carrier Time Domain Resource Allocation, TDRA, index;
retrieving (732), based on the multi-carrier TDRA index, from a multi-carrier TDRA table stored by the UE (705), a TDRA for the first PDSCH and a TDRA for the second PDSCH; and
receiving (733), by the UE (705), the first PDSCH, using time domain resources for PDSCH reception based on the retrieved TDRA for the first PDSCH, wherein:
the DCI further includes a K1 timing parameter; and
the method further includes transmitting (734), by the UE (705), a Physical Uplink Control Channel, PUCCH, corresponding to the first PDSCH and to the second PDSCH, a slot containing the PUCCH being determined, relative to a reference PDSCH of the first PDSCH and the second PDSCH, by the K1 timing parameter,
wherein the reference PDSCH is the PDSCH, of the first PDSCH and the second PDSCH, having the latest ending symbol.

2. The method of claim 1, wherein the multi-carrier TDRA table is Radio Resource Control, RRC, configured to the UE (705) by a network node, gNB (710).

3. The method of claim 1 or 2, wherein:
the DCI further includes a PUCCH resource indicator, PRI; and
the symbol position of the PUCCH within the slot is determined by the PRI.

4. The method of any one of claims 1 to 3, wherein:
the DCI further includes a serving cell combination index; and
the method further includes retrieving (736), based on the serving cell combination index, from a serving cell combination table stored by the UE (705), an identifier of the first CC and an identifier of the second CC.

5. The method of any one of claims 1 to 4, wherein the DCI further includes:
a first Frequency Domain Resource Allocation, FDRA, field for the first PDSCH; and
a second FDRA field for the second PDSCH.

6. The method of any one of claims 1 to 5, wherein the DCI further includes:
a first redundancy value, RV, field for the first PDSCH; and
a second RV field for the second PDSCH.

7. The method of any one of claims 1 to 6, wherein the DCI further includes:
a first Modulation Coding Scheme, MCS, index field for the first PDSCH; and
a second MCS index field for the second PDSCH.

8. A User Equipment, UE (705), comprising:
one or more processors; and
a memory storing instructions which, when executed by the one or more processors, cause performance of the method of any one of claims 1 to 7.

## Patentansprüche

1. Verfahren, umfassend:
Empfangen (730), durch eine Benutzervorrichtung, UE, (705) in einem ersten Komponententräger, CC, von Downlink-Control-Informationen, DCI, wobei die DCI einen ersten gemeinsamen physikalischen Downlink-Kanal, PDSCH, in einem zweiten CC und einen zweiten PDSCH in einem dritten CC planen, wobei der zweite CC und der dritte CC verschieden sind und die DCI einen Multi-Carrier-Time-Domain-Resource-Allocation-, TDRA-, Index beinhalten;
Abrufen (732) einer TDRA für den ersten PDSCH und einer TDRA für den zweiten PDSCH auf der Grundlage des Multi-Carrier-TDRA-Index aus einer durch die UE (705) gespeicherten Multi-Carrier-TDRA-Tabelle; und
Empfangen (733) des ersten PDSCH durch die UE (705) unter Verwendung von Zeitbereichsressourcen für einen PDSCH-Empfang auf der Grundlage der abgerufenen TDRA für den ersten PDSCH, wobei:
die DCI ferner einen K1-Timing-Parameter beinhalten; und
das Verfahren ferner ein Senden (734) durch die UE (705) eines physikalischen Uplink-Kontrollkanals, PUCCH, der dem ersten PDSCH und dem zweiten PDSCH entspricht, umfasst, wobei ein den PUCCH enthaltender Slot relativ zu einem Referenz-PDSCH des ersten PDSCH und des zweiten PDSCH durch den K1-Timing-Parameter bestimmt wird,
wobei der Referenz-PDSCH derjenige PDSCH des ersten PDSCH und des zweiten PDSCH ist, der das zuletzt endende Symbol aufweist.

2. Verfahren nach Anspruch 1, wobei die Multi-Carrier-TDRA-Tabelle durch einen Netzwerkknoten, gNB, (710) mittels Radio-Resource-Control, RRC, für die UE (705) konfiguriert wird.

3. Verfahren nach Anspruch 1 oder 2, wobei:
die DCI ferner einen PUCCH-Ressourcenindikator, PRI, umfassen; und
die Symbolposition des PUCCH innerhalb des Slots durch den PRI bestimmt wird.

4. Verfahren nach einem der Ansprüche 1 bis 3, wobei:
die DCI ferner einen Serving-Cell-Kombinationsindex beinhalten; und
das Verfahren ferner ein Abrufen (736) einer Kennung des ersten CC und einer Kennung des zweiten CC aus einer durch die UE (705) gespeicherten Serving-Cell-Kombinationstabelle auf der Grundlage des Serving-Cell-Kombinationsindex umfasst.

5. Verfahren nach einem der Ansprüche 1 bis 4, wobei die DCI ferner umfassen:
ein erstes Frequency-Domain-Resource-Allocation-, FDRA-, Feld für den ersten PDSCH; und
ein zweites FDRA-Feld für den zweiten PDSCH.

6. Verfahren nach einem der Ansprüche 1 bis 5, wobei die DCI ferner umfassen:
ein erstes Redundanzwert-, RV-, Feld für den ersten PDSCH; und
ein zweites RV-Feld für den zweiten PDSCH.

7. Verfahren nach einem der Ansprüche 1 bis 6, wobei die DCI ferner umfassen:
ein erstes Modulation-Coding-Scheme-, MCS-, Indexfeld für den ersten PDSCH; und
ein zweites MCS-Indexfeld für den zweiten PDSCH.

8. Benutzervorrichtung, UE, (705), aufweisend:
einen oder mehrere Prozessoren; und
einen Speicher, der Anweisungen speichert, die, wenn sie durch den einen oder die mehreren Prozessoren ausgeführt werden, eine Durchführung des Verfahrens nach einem der Ansprüche 1 bis 7 bewirken.

## Revendications

1. Procédé comprenant les étapes suivantes:
recevoir (730), par un équipement utilisateur, UE (705), sur une première porteuse composante, CC, une information de commande de liaison descendante, DCI, la DCI ordonnançant un premier canal physique partagé de liaison descendante, PDSCH, sur une deuxième CC et un deuxième PDSCH sur une troisième CC, la deuxième CC et la troisième CC étant différentes l'une de l'autre, la DCI comprenant un indice d'allocation de ressources dans le domaine temporel, TDRA, multiporteuse ;
récupérer (732), sur la base de l'indice de TDRA multiporteuse, à partir d'une table de TDRA multiporteuse stockée par l'UE (705), une TDRA pour le premier PDSCH et une TDRA pour le deuxième PDSCH ; et
recevoir (733), par l'UE (705), le premier PDSCH en utilisant, pour la réception du PDSCH, des ressources du domaine temporel basées sur la TDRA récupérée pour le premier PDSCH,
dans lequel :
la DCI comprend en outre un paramètre de temporisation K1 ; et
le procédé comprend en outre la transmission (734), par l'UE (705), d'un canal physique de commande de liaison montante, PUCCH, correspondant au premier PDSCH et au deuxième PDSCH, un créneau contenant le PUCCH étant déterminé, par rapport à un PDSCH de référence parmi le premier PDSCH et le deuxième PDSCH, au moyen du paramètre de temporisation K1,
dans lequel le PDSCH de référence est celui, parmi le premier PDSCH et le deuxième PDSCH, dont le symbole de fin est le plus tardif.

2. Procédé selon la revendication 1, dans lequel la table de TDRA multiporteuse est
configurée pour l'UE (705), par un nœud de réseau, gNB (710), au moyen d'une commande de ressources radio, RRC.

3. Procédé selon la revendication 1 ou 2, dans lequel :
la DCI comprend en outre un indicateur de ressource de PUCCH, PRI ; et
la position de symbole du PUCCH dans le créneau est déterminée par le PRI.

4. Procédé selon l'une quelconque des revendications 1 à 3, dans lequel :
la DCI comprend en outre un indice de combinaison de cellules de desserte ; et
le procédé comprend en outre la récupération (736), sur la base de l'indice de combinaison de cellules de desserte, à partir d'une table de combinaisons de cellules de desserte stockée par l'UE (705), d'un identifiant de la première CC et d'un identifiant de la deuxième CC.

5. Procédé selon l'une quelconque des revendications 1 à 4, dans lequel la DCI comprend en outre :
un premier champ d'allocation de ressources dans le domaine fréquentiel, FDRA, pour le premier PDSCH ; et
un deuxième champ FDRA pour le deuxième PDSCH.

6. Procédé selon l'une quelconque des revendications 1 à 5, dans lequel la DCI comprend en outre :
un premier champ de valeur de redondance, RV, pour le premier PDSCH ; et
un deuxième champ RV pour le deuxième PDSCH.

7. Procédé selon l'une quelconque des revendications 1 à 6, dans lequel la DCI comprend en outre :
un premier champ d'indice de schéma de modulation et de codage, MCS, pour le premier PDSCH ; et
un deuxième champ d'indice MCS pour le deuxième PDSCH.

8. Équipement utilisateur, UE (705), comprenant :
un ou plusieurs processeurs ; et
une mémoire stockant des instructions qui, lorsqu'elles sont exécutées par les un ou plusieurs processeurs, provoquent l'exécution du procédé selon l'une quelconque des revendications 1 à 7.
